# EUROPÄISCHE PATENTANMELDUNG

(11) **EP 0 977 383 A2**
(43) Veröffentlichungstag der Anmeldung: **02.02.2000**
(21) Anmeldenummer: 99440199.0
(22) Anmeldetag: 16.07.1999
(51) Int. Cl.: H04B 10/158

(54) **Empfänger für den Einsatz in einem Übertragungssystem für spektral kodierte Daten sowie ein Verfahren**

(30) Priorität: 25.07.1998 DE 19833549
(71) Anmelder: ALCATEL, 75008 Paris (FR); Alcatel SEL Aktiengesellschaft, D-70435 Stuttgart (DE)
(72) Erfinder: Pfeiffer, Thomas, Dr., 70569 Stuttgart (DE)
(74) Vertreter: Rausch, Gabriele, Dr.

(57) **Zusammenfassung**

Es wird ein Verfahren zum Empfang von spektral kodierten Daten sowie ein Empfänger vorgeschlagen, wobei ein optisches Signal dekodiert, in ein elektrisches Signal gewandelt und verstärkt wird und wobei das optische Signal durch Modulation der Abstimmung des optischen Filters in einer ersten Frequenz moduliert wird, das modulierte Signal in einem lichtempfindlichen Detektor in ein elektrisches Signal einer zweiten Frequenz gewandelt wird und dieses elektrische Signal in einem Detektor zurück ins Basisband transformiert wird.

## Beschreibung

Die Erfindung geht aus von einem Empfänger für den Einsatz in einem Übertragungsystem für spektral kodierte Daten und einem verfahren nach der Gattung der unabhängigen Ansprüche.

Aus dem Stand der Technik, beispielsweise aus der Patentanmeldung DE 197 23 103.9 ,sind Übertragungsverfahren unter Verwendung spektraler Kodierung bekannt. Ein solches Übertragungsnetz besteht aus optischen Übertragungsleitungen und optischen Splittern, sowie gegebenenfalls optischen Verstärkern und dient zur Übertragung kodierter, gemultiplexter optischer Signale. Jeder Sender enthält einen Kodierer, in dem die zu übertragenden Signale vor ihrer Aussendung ins optische Übertragungsnetz kodiert werden. Die Kodierung erfolgt auf optischem Wege, z.B. durch Frequenzkodierung mit einem optischen Filter. Jeder Empfänger, der die Daten eines speziellen Senders empfangen will, muß einen Dekodierer enthalten, der auf dem Kodierer dieses bestimmten Senders abgestimmt ist. Im einfachsten Fall sind die Frequenzbereiche, die für optische Signale durchlässig, und die Frequenzbereiche, die für optische Signale gesperrt sind, beim Kodierer und beim Dekodierer gleich. Dieses Verfahren ist unter dem Begriff CDMA (Code Division Multiple Access) bekannt. Als Sender dienen in diesem System z.B. Leuchtdioden, deren breitbandiges Emissionsspektrum ein optisches Filter durchläuft. Das optische Filter ist beispielsweise ein Fabry-Perot-Filter, das das breitbandige Spektrum in einen Frequenzkamm wandelt. Empfangsseitig ist beispielsweise aus der Patentanmeldung DE 19723103.9 ein Differenzempfänger bekannt. Ein solcher Empfänger beinhaltet einen Dekodierer, der auf den Kodierer des Senders abgestimmt ist, dessen optische Signale er empfangen will oder berechtigt ist, zu empfangen. Insbesondere die gleichzeitige Aktivität mehrerer Sender im optischen Übertragungsnetz führt zu einem Übersprechen der optischen Signale der Sender im Empfänger. In den zu detektierenden Signalen sind somit auch Anteile an optischen Signalen anderer Sender enthalten, die sich als Störung bemerkbar machen. Es ist bekannt, diese Störungen durch Abgleich im Differenzempfänger zu unterdrücken. Ein solcher Empfänger mit Abgleich der beiden Signalzweige ist aus der Patentanmeldung DE 19748756.4 bekannt. In diesem vorgeschlagen optischen Differenzempfänger für frequenzkodierte optische CDMA-Systeme ist es notwendig, innerhalb der elektrischen Modulationsbandbreite, z.B. 108 MHz für ein n•155 MBit/s-System, einen Gleichlauf der beiden Empfangsarme bezüglich der Amplituden- und der Phasenverschiebungen der Signale von unter 0,1 dB und <10 ps für alle Frequenzen zu gewährleisten. Damit kann man beispielsweise eine Bitfehlerrate < 10⁻⁹ erreichen. Die Anforderungen an einen solchen optischen Differenzempfänger steigen allerdings mit der Zahl der Simultansender im Netz, so daß es zunehmend schwieriger wird wesentlich mehr als 8 Sender ans Netz zu bringen. Für große Senderzahlen muß daher auf das Konzept des Differenzempfängers verzichtet werden. Um dennoch die notwendige Unterdrückung des Übersprechens der nicht zu empfangenden Kanäle zu erzielen, wird der erfindungsgemäße Empfänger eingesetzt.

Der erfindungsgemäße Empfänger mit den kennzeichnenden Merkmalen des Hauptanspruchs hat dem gegenüber den Vorteil, daß eine hohe Zahl an Sendern in einem Übertragungssystem betrieben werden können. Durch Modulation des optischen Signals wird die Übersprechempfindlichkeit weitgehend unterdrückt.

Durch die in den Unteransprüchen aufgeführten Maßnahmen sind vorteilhafte Weiterbildungen und Verbesserungen des im unabhängigen Anspruch angegebenen Empfängers möglich.

Vorteilhafterweise wird im Empfänger durch eine Modulation der Filtercharakteristik des optischen Filters eine hohe Unterdrückung des Übersprechens der anderen Kanäle gewährleistet. Vorteilhafterweise wird die Modulation des optischen Filters mit einer hohen Frequenz vorgenommen und das modulierte Signal mit einem Mikrowellendetektor ausgewertet.

Eine vorteilhafte Ausführungsform wählt als optischen Dekodierer ein Mach-Zehnder-Filter. Eine andere Ausführungsform beinhaltet als optischen Dekodierer ein Fabry-Perot-Filter. Das optische Filter ist vorteilhafterweise direkt mit einem Mikrowellengenerator verbunden. Die Modulationsfrequenz ist dabei stets größer als die Frequenz der Bitrate der Datenübertragung.

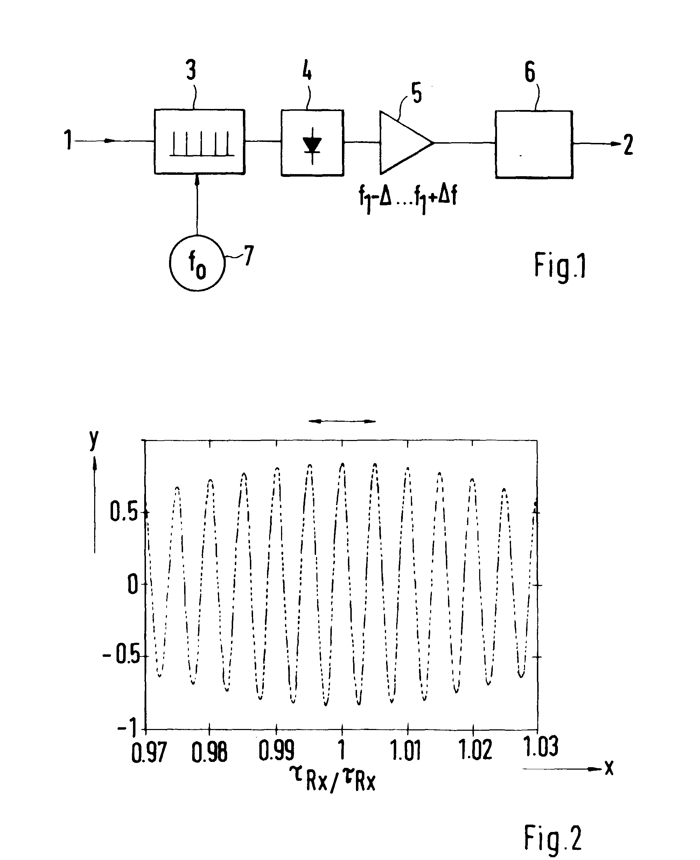

Ein Ausführungsbeispiel der Erfindung ist in der Zeichnung dargestellt und in der nachfolgenden Beschreibung näher erläutert.
Der Signaleingang (1) ist mit einem optischen Filter (3) verbunden, das wiederum mit einem Mikrowellenoszillator (7) in Verbindung steht. Der optische Ausgang des optischen Filters (3) ist mit dem Eingang eines Photodetektors (4) verbunden, dessen Ausgang an einem Verstärker (5) anliegt. Das Ausgangssignal des Verstärkers gelangt in einen Mikrowellendetektor (6), von dem aus die elektrischen Ausgangsdaten (2) weiter zur Verfügung stehen. Figur 2 zeigt einen Ausschnitt aus der Abstimmkurve des optischen Filters (3). Entlang der x-Achse ist die normierte, inverse FSR (Free Spectral Range) des Empfangsfilters aufgetragen, die y-Achse repräsentiert die optische Ausgangsleistung des optischen Filters (3).
Mit Hilfe des Mikrowellenoszillators (7) wird der freie Spektralbereich (FSR) des optischen Filters (3) mit einer Frequenz ƒ₀ um wenige Bruchteile, beispielsweise 10⁻⁵, moduliert. Die Modulation des optischen Filters (3) kann dabei beispielsweise über einen optischen Phasenmodulator erfolgen. Die Modulationsfrequenz ƒ₀ muß dabei größer sein als die Bitrate *ƒ*_{*data*} der zu detektierenden Daten. Der Hub ist so groß, daß mindestens ein Maximum und ein Minimum der Abstimmkurve des optischen Filters (3) durchlaufen wird. Das Ausgangssignal an der Photodiode (5) ist dann amplitudenmoduliert mit einer Frequenz *ƒ*₁ > *ƒ*₀*,* wobei Beiträge von höheren Harmonischen vernachlässigt werden. Der genaue Wert von ƒ₁ hängt vom Hub der FSR-Modulation ab und kann mit diesem eingestellt werden. Der Frequenzunterträger bei *ƒ*₁ ist noch mit den Datensignalen moduliert, so daß zur elektrischen Verstärkung ein Schmalbandverstärker mit einer Bandbreite von 2* Δ*ƒ* um einen Zentralfrequenz von *ƒ*₁ benötigt wird. Beispielsweise reicht *Δƒ* = 0,7 **ƒ*_{*data*} als Bandbreite für den Verstärker aus. Die Rücktransformation des Unterträgersignals in das Basisband erfolgt beispielsweise mit einem Mikrowellendetektor. Die zu unterdrückenden Sender, die durch Übersprechen der Kanäle im Empfänger empfangen werden, ergeben keinen Beitrag, da für sie die entsprechende Abstimmkurve eine Konstante ist, das heißt nicht von der Feineinstellung des freien Spektralbereichs des optischen Filters (3) abhängt und daher auch kein Mikrowellensignal in der Photodiode erzeugt.

Dieselben Vorteile erreicht man, indem man sendeseitig das optische Signal so beeinflußt, daß der übertragenen Frequenzkamm einem Jitter unterliegt. Dabei ist es möglich, wie in der Patentanmeldung DE 19822616.0 beschrieben, das optische Sendesignal zu beeinflussen und auf der Empfängerseite durch Einsatz des Mikrowellendetektors das elektrische Signal auszuwerten. Dabei kann der Jitter sendeseitig durch Modulation der Trägerfrequenz des Frequenzkamms erfolgen oder auch durch ein Modulation des FSR des Senderfilters.

Die gleichen Vorteile erzielt man, indem man auf der Senderseite statt das FSR des optischen Filters, das Empfangsspektrum verschiebt.
Alle Varianten mit aufgeprägtem optischen Jitter müssen mit einer Frequenz *ƒ*₀ größer als die Bitrate *ƒ*_{*data*} ausgeführt werden.

Als Mikrowellendetektor kann empfangsseitig ein Hüllkurven-Detektor eingesetzt werden, aber auch einen Auswertung über einen kohärenten Überlagerungsempfang ist möglich.

## Patentansprüche

1. Empfänger für den Einsatz in einem Übertragungssystem für spektral kodierte Daten mit periodischen optischen Filter (3) , lichtempfindlichen Detektoren (4) und elektrischen Signalverstärkern (5), dadurch gekennzeichnet, daß ein Eingangssignal auswertbar ist, das sender- oder empfängerseitig durch eine aufgeprägten Jitter der Trägerfrequenz des Frequenzkamms oder durch Jitter der Frequenzabstände des Frequenzkamms moduliert wird.

2. Empfänger für den Einsatz in einem Übertragungssystem für spektral kodierte Daten mit periodischen optischen Filter (3) , lichtempfindlichen Detektoren (4) und elektrischen Signalverstärkern (5), dadurch gekennzeichnet, daß die Filtercharakteristik des mindestens einen optischen Filters (3) mit einer Frequenz f₀ modulierbar ist und daß das über den lichtempfindlichen Detektor (4) gewonnene elektrische Signal an einem Mikrowellendetektor (6) anliegt .

3. Empfänger nach einem der vorhergehenden Ansprüche, dadurch gekennzeichnet, daß das optische Filter ein Mach-Zehnder-Filter ist

4. Empfänger nach einem der vorhergehenden Ansprüche, dadurch gekennzeichnet, daß das optische Filter ein Fabry-Perot-Filter ist.

5. Empfänger nach einem der vorhergehenden Ansprüche, dadurch gekennzeichnet, daß das optische Filter (3) mit einem Mikrowellengenerator (7) verbunden ist.

6. Empfänger nach einem der vorhergehenden Ansprüche, dadurch gekennzeichnet, daß die Frequenz der Modulation größer als die Frequenz der Bitrate der Datenübertragung ist.

7. Empfänger nach einem der vorhergehenden Ansprüche, dadurch gekennzeichnet, daß der Modulationshub mindestens so groß ist, daß ein Maximum und ein Minimum der Abstimmkurve des optischen Filters durchlaufen wird.

8. Verfahren zum Empfang von spektral kodierten optischen Signale in einem CDMA-Übertragungssystem, wobei ein optisches Signal dekodiert, in ein elektrisches Signal gewandelt und verstärkt wird, dadurch gekennzeichnet, daß das optische Signal durch Modulation der Abstimmung des optischen Dekodierers mit einer ersten Frequenz moduliert wird, das modulierte Signal in einem lichtempfindlichen Detektor in ein elektrisches Signal einer zweiten Frequenz gewandelt wird, und dieses elektrische Signal in einem Detektor zurück ins Basisband transformiert wird.

9. Verfahren zum Empfang von spektral kodierten optischen Signale in einem CDMA-Übertragungssystem, wobei ein optisches Signal dekodiert, in ein elektrisches Signal gewandelt und verstärkt wird, dadurch gekennzeichnet, daß das optische Signal durch Modulation im Sender moduliert wird, das modulierte Signal in einem lichtempfindlichen Detektor in ein elektrisches Signal einer zweiten Frequenz gewandelt wird, und dieses elektrische Signal in einem Detektor zurück ins Basisband transformiert wird.

10. Verfahren nach Anspruch 8, dadurch gekennzeichnet, daß das elektrische Signal vor der Rücktransformation in das Basisband elektrisch verstärkt wird.
